# EUROPEAN PATENT APPLICATION

(11) **EP 4 712 445 A2**
(43) Date of publication of application: **18.03.2026**
(21) Application number: 26154056.1
(22) Date of filing: 02.05.2023
(51) Int. Cl.: H04L 67/148

(54) **SWITCHING A SERVICE FROM A WTRU TO A PIN AND A PIN TO A WTRU**

(30) Priority: 09.05.2022 US 202263339817 P
(62) Divisional of application: 23731779.7
(71) Applicant: InterDigital Patent Holdings, Inc., Wilmington, DE 19809 (US)
(72) Inventor: PURKAYASTHA, Debashish, Eagleville, 19403 (US); GAZDA, Robert, Spring City, 19475 (US); STARSINIC, Michael, Newtown, 18940 (US); ABBAS, Taimoor, Sainte-Julie, J3E 3H2 (CA); SETHI, Anuj, Ottawa, K4M 0J6 (CA); AHMAD, Saad, Montreal, H2X 0B3 (CA); MONRAD, Atle, 4820 Froland (NO)
(74) Representative: AWA Sweden AB - Alternative

(57) **Abstract**

A wireless transmit/receive unit (WTRU) may receive a service switch message from a network node, requesting a session to be switched from the WTRU to a personal internet of things (loT) network (PIN) element (PINE). The PINE may be associated with the PIN. The WTRU may determine a second WTRU that supports session switching. The WTRU may send a confirmation message to the network node, indicating a session identifier and/or an indication indicating that the second WTRU supports the session switching. The WTRU may send a configuration message to the second WTRU, indicating a PINE identifier, the session identifier, and/or a request to support the session switching. The WTRU may receive a confirmation message from the second WTRU, indicating that the second WTRU has been configured to support the session switching. The WTRU may send a service switch response message to the network node.

## Description

### CROSS-REFERENCE TO RELATED APPLICATIONS

This application claims the benefit of U.S. Provisional Application Serial No. 63/339,817 filed May 09, 2022, the contents of which are incorporated by reference herein.

### BACKGROUND

Mobile communications using wireless communication continue to evolve. A fifth generation may be referred to as 5G. A previous (legacy) generation of mobile communication may be, for example, fourth generation (4G) long term evolution (LTE).

### SUMMARY

Systems, methods, and instrumentalities are described herein for switching a service, such as an existing service and/or a streaming service, from a wireless transmit/receive unit (WTRU) to a personal internet of things (IoT) network (PIN) and/or from a PIN to a WTRU.

A WTRU may receive a service switch request message. For example, a WTRU may receive a service switch request message from a network node. The service switch request message may request the WTRU that a session is switched from the WTRU to a PIN element (PINE). The PINE may be associated with the PIN. In examples, the WTRU may be a PINE with management capability (PEMC). In examples, the network node may be a PIN server (PCS).

The service switch request message may be, and/or may include, an Application Session identification (ID), information associated with a destination PINE, an indication indicating whether an application session may be split among two or more PINEs, a description associated with the session, and/or a token that indicates that the WTRU (e.g., the PINE where the session may be terminated) may be an end point for the session. For example, the information associated with the destination PINE may be, and/or may include, an internet protocol IP address associated with the destination PINE, a port number associated with the destination PINE, or a uniform resource locator (URL) associated with the destination PINE and wherein the description associated with the session comprises an Internet Protocol (IP) 4 Tuple.

The WTRU (e.g., the first WTRU and/or the PEMC) may determine a second WTRU. For example, the second WTRU may be a PINE with gateway capability (PEGC). The second WTRU may support session switching. For example, the second WTRU may support session switching to a PINE within the PIN, by accepting the application session and forwarding to a selected PINE. In examples, the WTRU, such as the first WTRU, may determine one or more WTRUs (e.g., PEGCs) that are associated with the PIN. The WTRU (e.g., the first WTRU) may determine a session capability criterion for supporting the session. For example, the session capability criterion for supporting the session may be, and/or may include, a capability to support the session, reachability information associated with the PINE, and/or a PIN policy. The capability to support the session may be, and/or may include, a computational capability associated with the WTRUs (e.g., the PEGCs) that may support the session, a memory capability associated with the WTRUs (e.g., the PEGCs) that may support the session, a bandwidth capability associated with the WTRUs (e.g., the PEGCs) that may support the session, a filtering capability associated with the WTRUs (e.g., the PEGCs) that may support the session, and/or the like. As described herein, the capability may be associated with a threshold level. For example, based on the threshold level, e.g., above the threshold level, the WTRU may determine that the WTRUs (e.g., the PEGCs) may satisfy the session capability criterion and may be a candidate for session switching.

The WTRU (e.g., the first WTRU and/or the PEMC) may determine whether a capability of the second WTRU (e.g., a PEGC associated with the PIN) satisfies the session capability criterion. Based on a determination that the capability of the second WTRU (e.g., a PEGC associated with the PIN) satisfies the session capability criterion, the WTRU (e.g., the first WTRU and/or the PEMC) may determine the second WTRU from the one or more WTRUs (e.g., one or more PEGCs associated with the PIN). The WTRU (e.g., the first WTRU and/or the PEMC) may determine a PINE identifier associated with the second WTRU.

The WTRU (e.g., the first WTRU) may send a confirmation message to the network node. The confirmation message may indicate a session identifier and/or an indication indicating that the second WTRU (e.g., the PEGC) supports the session switching. The session identifier may be, and/or may include, a terminating identifier associated with the second WTRU (e.g., the PEGC), reachability information associated with the second WTRU (e.g., the PEGC), and/or reachability information associated with the PINE. The reachability information associated with the second WTRU (e.g., the PEGC) may be, and/or may include, an IP address associated with the second WTRU (e.g., the PEGC), a port number associated with the second WTRU (e.g., the PEGC), and/or a URL associated with the second WTRU (e.g., the PEGC). The reachability information associated with the PINE may be, and/or may include, an IP address associated with the PINE, a port number associated with the PINE, and/or a URL associated with the PINE.

The WTRU (e.g., the first WTRU) may send a configuration message to the second WTRU (e.g., the PEGC). The configuration message may indicate a PINE identifier, a session identifier, and/or a request to support the session switching. For example, the configuration message may be, and/or may include, a list of PINE IDs (PEIDs), an IP address associated with the PINE, a port number associated with the PINE, and/or a URL associated with the PINE. The configuration may be, and/or may include, an indication indicating whether the session may be split (e.g., may need to be split) to two or more PINEs.

The WTRU (e.g., the first WTRU) may receive a confirmation message from the second WTRU (e.g., PEGC). The confirmation message may indicate that the second WTRU (e.g., PEGC) has been configured to support the session switching by forwarding data associated with the session to the PINE. For example, the configuration may involve setting up an end point identifier of a network node and/or a PINE, e.g., to allow receiving and/or forwarding application data, to set up a forwarding table to forward the application data from the network node to the PINE. The WTRU (e.g., the first WTRU) may send a service switch response message to the network node. The service switch response message may indicate that the second WTRU (e.g., PEGC) has been configured to forward the data associated with the session to the PINE

In examples, a WTRU may discover a suitable PIN that may support and/or enhance an application experience. An ongoing application session may be switched to the suitable PIN. A WTRU may request a service switch by a PIN application server (AS), which may execute a service switch process. For example, the service switch process described herein may be, and/or may include, service to be switched from a WTRU to a PIN. In examples, a WTRU may request a service switch by a PIN element (PINE), such as a PEMC. For example, a PEMC may execute the service switch process (e.g., switching a service from a WTRU to a PIN). In examples, a WTRU may request a service switch by a PIN AS. For example, a PIN AS may execute the service switch process (e.g., switching a service from a PIN to a WTRU).

### BRIEF DESCRIPTION OF THE DRAWINGS

FIG. 1A is a system diagram illustrating an example communications system in which one or more disclosed embodiments may be implemented.
FIG. 1B is a system diagram illustrating an example wireless transmit/receive unit (WTRU) that may be used within the communications system illustrated in FIG. 1A according to an embodiment.
FIG. 1C is a system diagram illustrating an example radio access network (RAN) and an example core network (CN) that may be used within the communications system illustrated in FIG. 1A according to an embodiment.
FIG. 1D is a system diagram illustrating a further example RAN and a further example CN that may be used within the communications system illustrated in FIG. 1A according to an embodiment.
FIG. 2 illustrates an example of a home automation Personal Internet of Things network (PIN).
FIG. 3 illustrates an example of a wearable PIN.
FIG. 4 illustrates an example of a PIN architecture.
FIG. 5 illustrates an example session flow switching a service (e.g., a session provided by an application server (AS)) from a WTRU to a PIN.
FIG. 6 illustrates one or more examples of PIN discoveries and PIN selections by a WTRU.
FIG. 7 illustrates an example of a service switch from a WTRU to a PIN executed by a PIN server.
FIG. 8 illustrates an example of a service switch from a WTRU to a PIN executed by a PEMC.
FIG. 9 illustrates an example of a service switch from a PIN to a WTRU executed by a PIN server.

### EXAMPLE NETWORKS FOR IMPLEMENTATION OF THE EMBODIMENTS

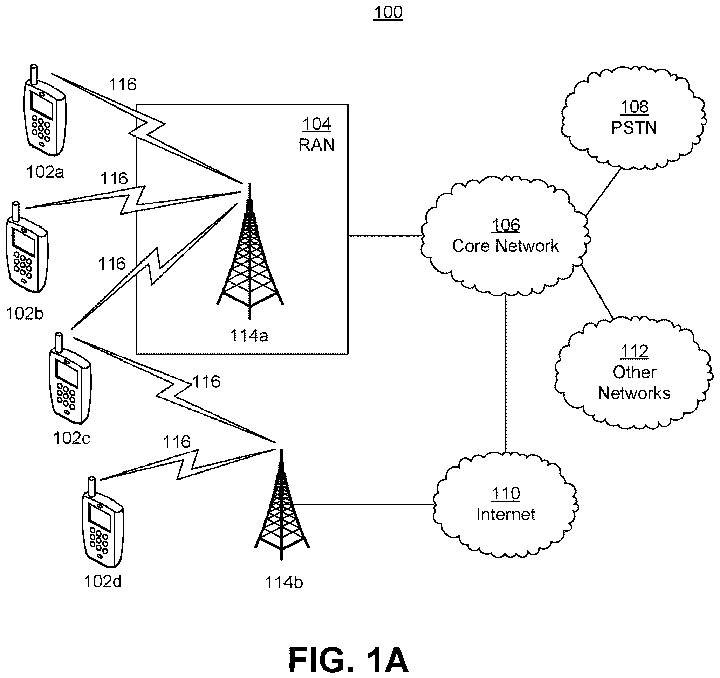

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access , which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., a eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

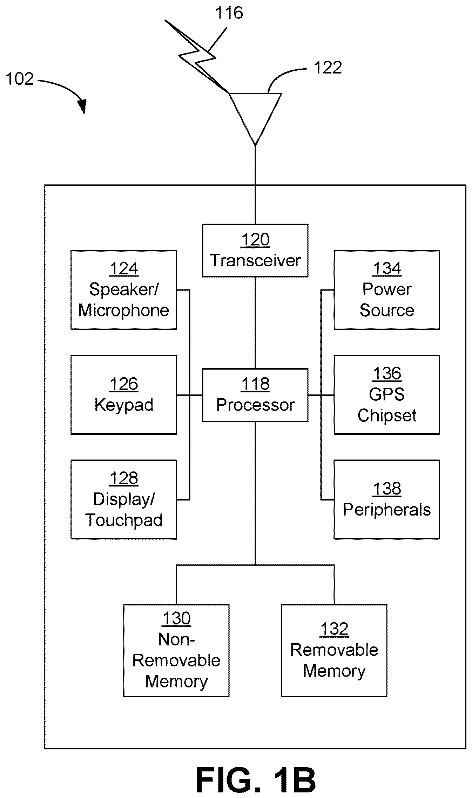

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WRTU 102 may include a half-duplex radio for which transmission and reception of some or all of the signals (e.g., associated with particular subframes for either the UL (e.g., for transmission) or the downlink (e.g., for reception)).

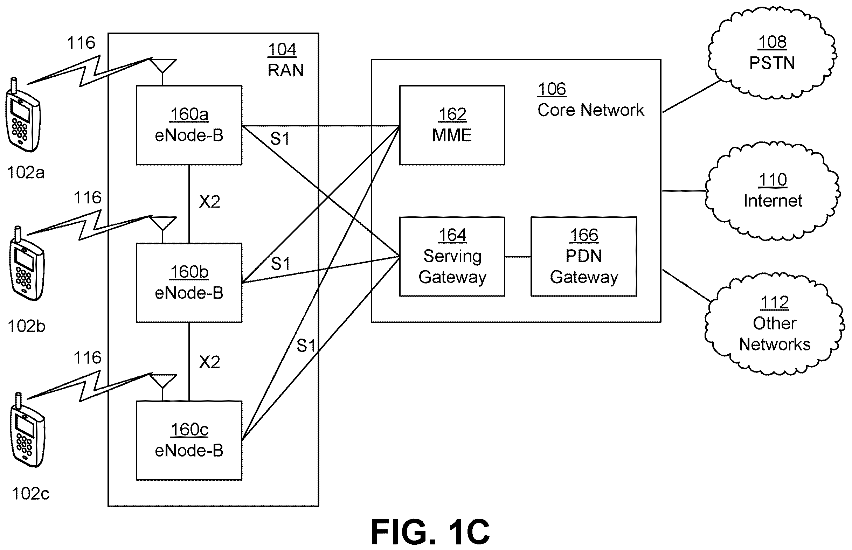

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements are depicted as part of the CN 106, it will be appreciated that any of these elements may be owned and/or operated by an entity other than the CN operator.

The MME 162 may be connected to each of the eNode-Bs 160a, 160b, 160c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

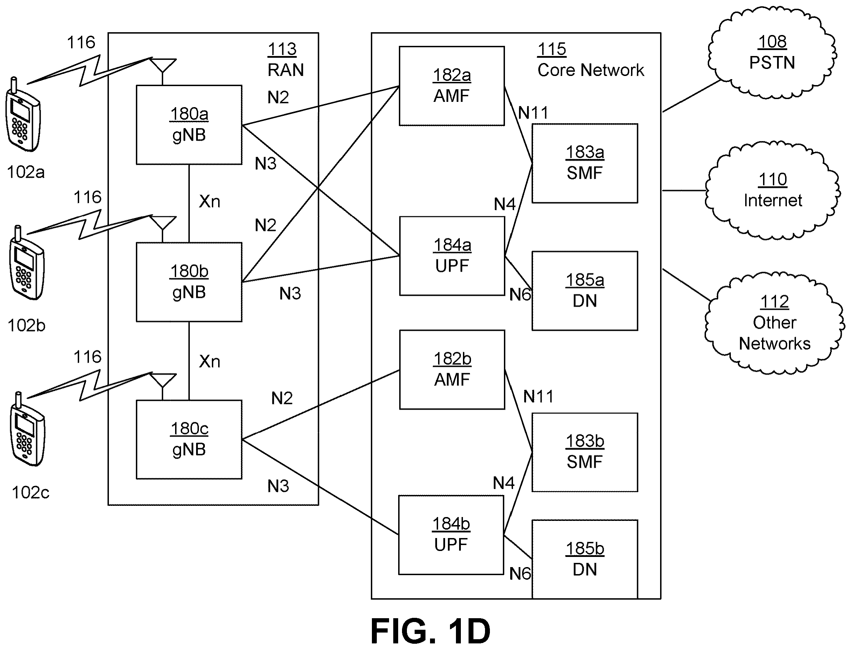

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTls) of various or scalable lengths (e.g., containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a,184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for machine type communication (MTC) access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184a, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of Figures 1A-1D, and the corresponding description of Figures 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

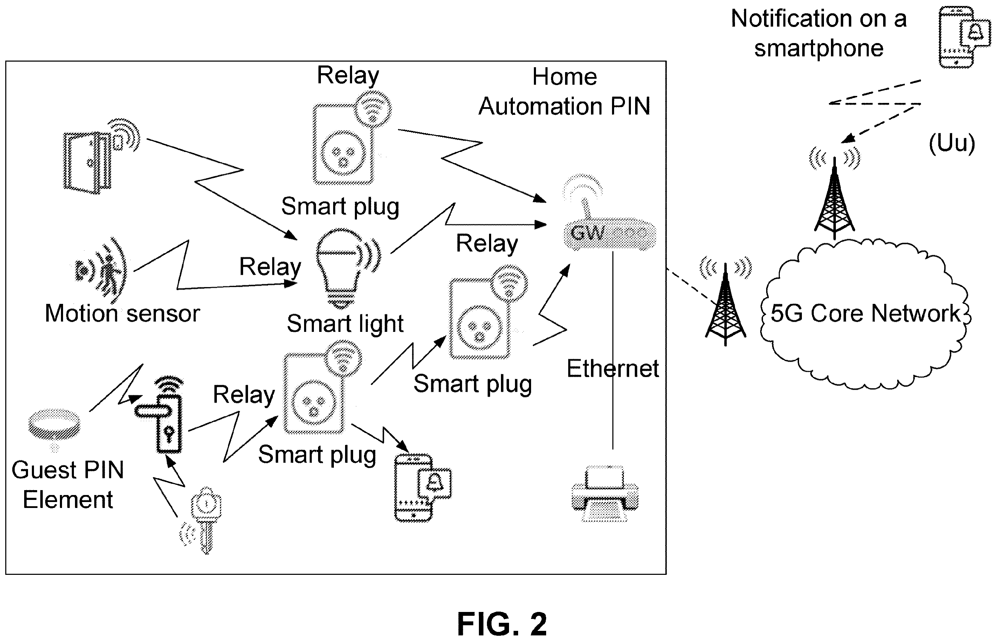

FIG. 2 illustrates an example of a home automation Personal Internet of Things (IoT) network (PIN). One or more PINs may be configured to switch a service from and/or to a WTRU. An Internet of Things (IoT) feature may be utilized by one or more devices that communicate using a cellular network, such as a traditional cellular network. The one or more devices with loT capabilities may have provide better user experience. In examples, the one or more devices with IoT capabilities may provide power consuming performance and/or network efficiency. For example, the one or more devices with loT capabilities may have better power consuming performance and/or increased network efficiency for one or more bulk operations.

One or more WTRUs with IoT capabilities may be organized in a PIN. For example, if one or more loT devices are deployed in an environment, such as a private environment, the one or more WTRUs with loT capabilities may be organized in a PIN. In examples, in a home environment, a security sensor, a smart light, a smart plug, a printer, a cellphone, and/or the like may be managed by a WTRU, such as a gateway (e.g., a residential gateway) and/or may communicate with each other. The one or more devices in the home environment may be an example of a PIN. A device (e.g., each device) may be a PIN element (PINE). One or more different PIN elements (PINEs) may have one or more different capabilities (e.g., corresponding different capabilities). A PIN Gateway (PIN GW) may provide one or more connections between PIN elements and/or connections between a network (e.g., a 5G network) and one or more PIN elements. A PINE may have management capability. For example, a PINE with management capability (PIN Mgmt or PEMC) may be, and/or may include, a PIN element that has (e.g., enables and/or provides a means for) an authorized administrator to configure and/or manage a PIN. In examples, a WTRU and/or a PINE, such as a PINE acting as a PIN GW, may support a PIN management function and/or may be a PIN Mgmt or PEMC.

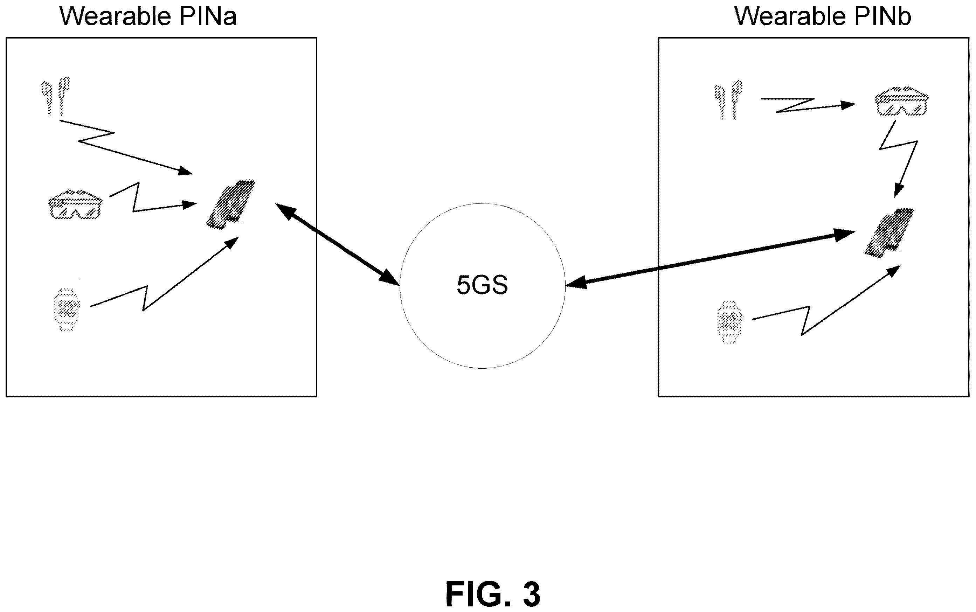

FIG. 3 illustrates an example of a wearable PIN. One or more wearable devices may be a type of PIN. For example, one or more wearable devices may be a PIN element. A WTRU (e.g., a smart phone) may act as a PIN element (PINE) with gateway capability (PIN GW) and/or as a PIN element with management capability (PIN Mgmt or PEMC). If a WTRU, such as a smart phone, acts as a PIN GW and/or as a PIN Mgmt, other wearables, such as a smart watch, virtual reality (VR) augmented reality (AR) glasses, audio devices, and/or the like may communicate with each other in the PIN and/or with other WTRUs via a network (e.g., 5G network) as illustrated in FIG. 3.

A PIN may be described by an architecture. A PIN may include a PIN element (PE or PINE), PIN management (PIN Mgmt or PEMC), and/or a PIN gateway (PIN GW). A PIN element may be a WTRU and/or one or more other devices (e.g., a non-3GPP device) that may communicate within a PIN. A PIN management device may be a PIN element with a capability to manage a PIN. A PIN GW may be a PIN element configured (e.g., with a capability) to provide connectivity to and/or from a network, such as a 5G network, for other PIN elements.

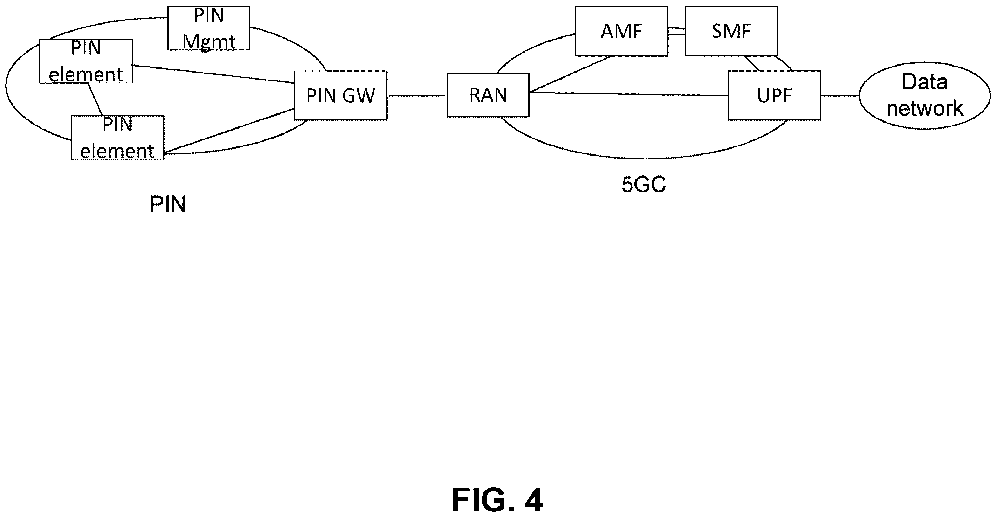

FIG. 4 illustrates an example of a PIN architecture. In examples, as illustrated in FIG. 4, PIN elements may communicate with each other via a PIN GW. In examples, as illustrated in FIG. 4, PIN elements may communicate with each other directly. The PIN elements may communicate with a system (e.g., a 5G system) to obtain a service (e.g., a 5G service) and/or communicate with a data network (e.g., via a 5G core network).

One or more PIN elements with management capabilities and/or one or more PIN elements with gateway capabilities may be WTRUs. One or more communications within a PIN may be carried out via non-3gpp communication, such as WiFi, Bluetooth, etc.

A PIN application framework (PINAPP) may provide application layer support for PINs, such as a PIN application layer functional model. A PINAPP may provide one or more of the following: information and/or support from a network (e.g., a 3GPP network) supporting PIN deployments; a service and/or an application discovery within a PIN; and/or a service and/or an application discovery by a WTRU outside of a PIN via a network (e.g., a 3GPP network).

A PIN network may be managed by a mobile network operator (MNO). For example, a PIN network may be managed by an MNO to support one or more application services (e.g., gaming service, remote health service, and/or the like) provided by one or more managed service providers. One or more users (e.g., in homes, enterprises, and/or elsewhere) may set up a PIN to operate an application service.

One or more application service providers may supply one or more PIN elements. For example, the users may purchase one or more PIN elements (e.g., off the shelf). The one or more PIN elements (PINEs) may be a mobile network device (e.g., a 3GPP device) or a non-mobile-network device (e.g., a non-3GPP device).

One or more users may run one or more applications in a WTRU and/or other devices, such as personal devices. A user may want to switch a service from a personal device to a device that is part of a PIN, e.g., for a better experience. For example, a user watching a streaming video on a smart phone may want to switch to a PIN (e.g., a PINE in a PIN) with a larger display and/or audio speakers.

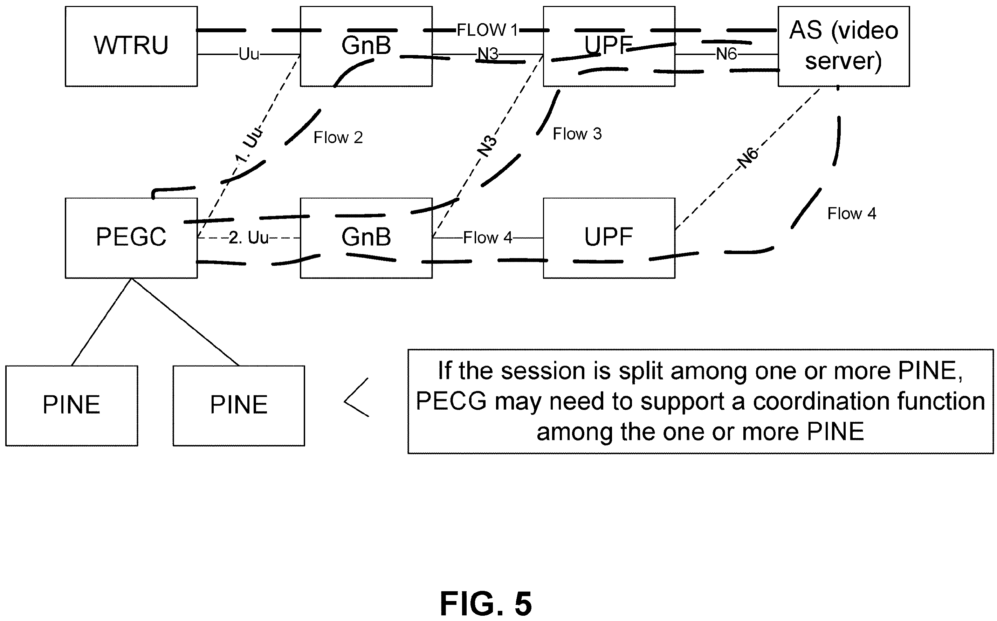

FIG. 5 illustrates an example session flow switching a service from a WTRU to a PIN. As illustrated in FIG. 5, a session (e.g., an original session or an ongoing session) provided by an application server (AS) to a WTRU (e.g., flow 1) may be switched to a PIN. A PINE with gateway capabilities (PEGC) may be a terminating point (e.g., from the perspective of a network, such as a core network with gateway capability or a 5GC) if the flow is switched to a PIN. The switch towards the PIN/PEGC may be implemented by a network (e.g., a core network with gateway capability or a 5GC) in one or more exemplary ways by service flows illustrated in FIG. 5 (e.g., Flow 2, Flow 3, and/or Flow 4).

As illustrated in FIG. 5, a WTRU may have a connection (e.g., a direct connection illustrated in Flow 1) to an AS. For example, if a WTRU is located outside of a PIN, the WTRU may have a direct connection (e.g., Flow 1) to the AS. The WTRU may be streaming a video from a server.

In examples, the WTRU may move into the coverage of the PIN. In examples, the WTRU may be outside the coverage of the PIN, and the PIN may have one or more capabilities, such as a large display (TV), high fidelity (HiFi) audio (e.g., speakers) to terminate the application traffic from the AS, such as a video server.

A switch may occur in the opposite direction. For example, a flow that is associated with an application running on PIN elements (PINEs), such as a large display and/or audio speakers, may move to a WTRU (e.g., as the user moves out of a home environment).

As illustrated in FIG. 5, a system (e.g., a 5G system (5GS)) may implement a switch in one or more directions (e.g., in any directions). A system (e.g., a 5GS) may know (e.g., be aware of) one or more end points where a switch may terminate (e.g., may need to terminate). One or more application-level processes may be used to provide information about one or more flow end points to the system (e.g., the 5GS).

As illustrated in FIG. 5, the system (e.g., the 5GS) may terminate the switched flow to a PEGC. The flow may be split into two or more subflows and may be terminated into two or more PINEs. A PEGC may split (e.g., be configured to split) the flow into one or more subflows and may terminate into one or more PINEs. Information indicating how to split and/or which one or more PINEs to terminate may be provided by a server (e.g., a PIN server) to a PEGC. A PEGC may manage one or more synchronizations between subflows. For example, a PEGC may manage one or more synchronizations between subflows by obtaining information from the server, such as the PIN server.

A service switch may be enabled considering one or more of the followings: a WTRU may be aware of the availability of a PIN that may support the service switch; a system (e.g., a 5GS) may use one or more application-level mechanisms to set up the service switch; and/or a PEGC may be enabled to split a flow into two or more subflows and may terminate towards two or more PINEs.

A WTRU may discover PIN. In examples, the WTRU may contact an AS, such as a PIN AS, to discover a PIN. The PIN may support a service switch. In examples, the WTRU may subscribe to the AS, such as the PIN AS, to be notified if the WTRU is in the vicinity of a PIN that is capable of performing a service switch process. The PIN AS may provide information about one or more devices in the PIN that may provide one or more types of services (e.g., video and/or audio streaming).

In addition to and/or alternative to contacting a PIN AS described herein, the WTRU may contact a PEMC. In examples, the WTRU may discover and/or join a PIN locally by contacting the PEMC. In examples, the WTRU may subscribe to the PEMC to be notified if a service switch is allowed. The WTRU may contact the PEMC to trigger a service switch process if the WTRU receives a notification.

In examples, a service switch may be triggered by an application mechanism. A WTRU may trigger a service switch process. For example, the WTRU may trigger a service switch by sending a request to an AS, such as a PIN AS. A PIN AS may initiate a service switch process as described herein. For example, the PIN AS may initiate a service switch after receiving the request. The PIN AS may provide one or more PINAPP functions, (e.g., a PIN AS, a PEMC, a PEGC, and/or the like) with information to execute the service switch (e.g., at a network level).

In examples, a WTRU may trigger a service switch by contacting a PEMC. The PEMC may initiate a service switch. For example, the PEMC may initiate a service switch process after receiving the request from the WTRU.

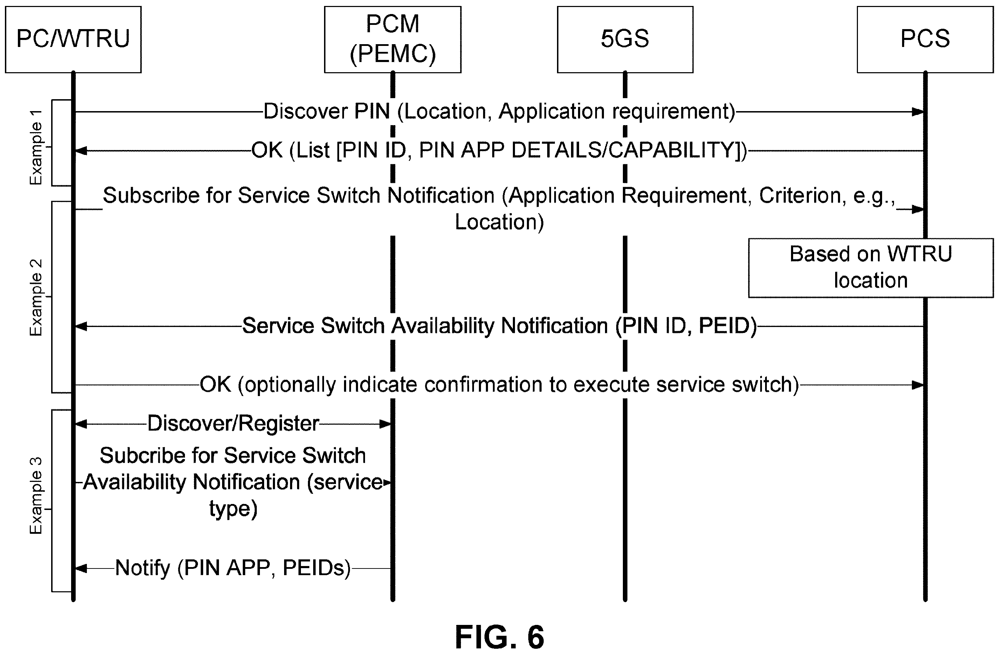

A WTRU may engage in PIN discovery and/or selection. FIG. 6 illustrates one or more examples of PIN discoveries and selections by a WTRU.

In examples, as illustrated in example 1 of FIG. 6, a WTRU may be outside of a home environment, away from a PIN, or in the coverage of a PIN. The WTRU may want to switch a service from the WTRU to a PIN device. The WTRU may initiate the discovery of a PIN with a PIN Server (PCS). The WTRU may send a message, such as a discover PIN message. The discover PIN message may be, and/or may include, an indication that the WTRU wants to discover a PIN that may support an application in a location. The message may be, and/or may include, location information and/or an application capability (e.g., application requirement). The location information may be, and/or may include, the current location of the WTRU and/or a location specified by the user. The application capability (e.g., an application requirement) may be, and/or may include, one or more PINAPP capabilities (e.g., one or more required PINAPP capabilities), such as a display characteristic, an audio characteristic, and/or the like.

Based on one or more location information details, a PIN server may search PIN database and may determine one or more available PINs in the specified location. Among the one or more available PINs, the PIN server may check a subscription associated with one or more WTRUs and/or a PIN policy. The PIN server may determine if the WTRU is allowed to use the PIN service. If the WTRU is allowed to use the PIN service, the PIN server may select the PIN. The PIN server may send the PIN ID (e.g., PINE identifier) and/or the one or more available PINEs in the PIN to the WTRU.

Based on the location information and /or the application service capability (e.g., application service requirement), a PIN server may send one or more of the following information to the WTRU: a discovered PIN ID; and/or one or more details of PINAPP capabilities and/or one or more corresponding PEIDs. For example, the one or more corresponding PEIDs may be, and/or may include, one or more device IDs, one or more IP addresses, one or more port numbers, and/or the like.

In examples, as illustrated in example 2 of FIG. 6, discovery and/or switching may be triggered by a PIN server based on the location of the WTRU. A WTRU may subscribe to a PIN server in a location specified by a user. For example, if a service switch is available based on the availability of one or more PIN devices that support the service in the location specified by the user, the PIN server may notify the WTRU.

The PIN server may obtain location information of the WTRU using one or more location services supported by a system, such as a 5GS. If the WTRU is in the specified location, the PIN server may get notified about the WTRU moving to the specified location. The PIN server may check the PIN database and may determine one or more available PINs in the location at that time. Based on the WTRU subscription and/or the PIN policy, if the WTRU is allowed to use the PIN, the PIN server may notify the WTRU.

If the WTRU is in a location and/or a PIN that may support a service is available, the PIN server may send a notification, such as a service switch availability notification, to the WTRU. The notification may be, and/or may include, information about one or more devices that may support the service, such as a PIN ID, PEIDs such as device IDs, IP addresses and port numbers, and/or the like. The WTRU may send a message, such as a confirmation message, to the PIN server to indicate that the WTRU is proceeding with the service switch.

In examples, as illustrated in example 3 of FIG. 6, a WTRU may discover and/or register with a PIN if the WTRU comes in the vicinity of the PIN. The WTRU may subscribe for service switch availability with a PCM/PEMC. The WTRU may provide one or more of service details, such as one or more service types, one or more desired PINAPPs (e.g., display, audio speakers, and/or the like,), and/or the like. The PCM may notify the WTRU if a PINAPP/PINE is available to support the service switch. The PCM may send one or more of the following: one or more PINAPP details, such as one or more display characteristics and/or one or more speaker characteristics; and/or one or more corresponding PEIDs, such as one or more device IDs, one or more IP addresses and port numbers, and/or the like.

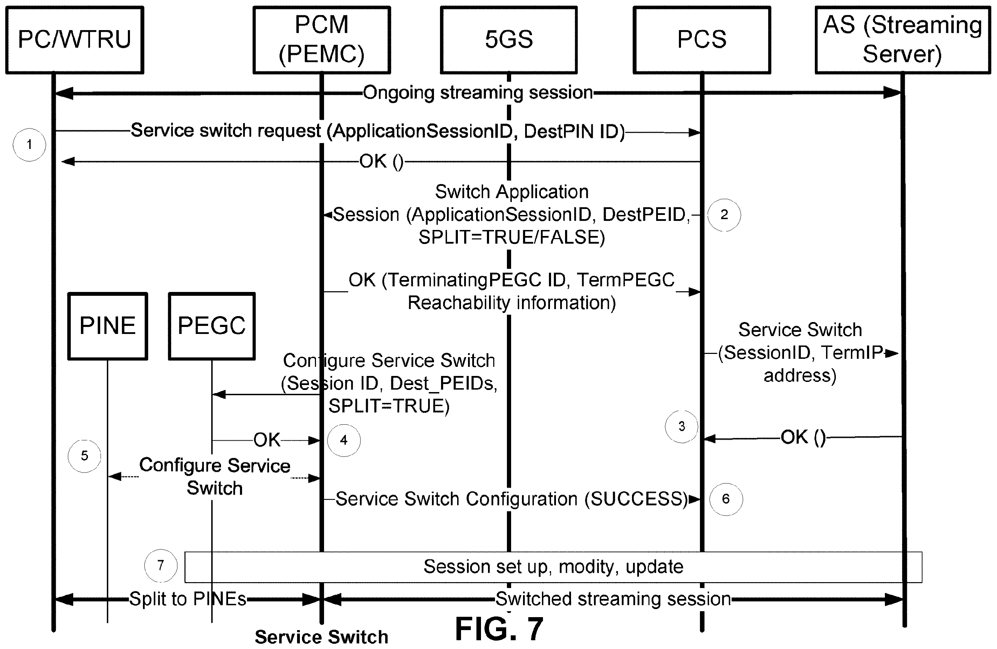

A WTRU may initiate a service switch and a PIN server may execute the service switch. For example, as illustrated in FIG. 7, a PIN server may switch a service from a WTRU to a PIN. FIG. 7 illustrates an example of a service switch executed by a PIN server. One or more processes illustrated in FIG. 7 may or may not be performed (e.g., skipped).

A WTRU may select a PIN. As illustrated in FIG. 7, after PIN selection, the WTRU may send a request, such as a service switch request, to a PCS/PIN server. The service switch request may be, and/or may include, information about the service to be switched. The information about the service to be switched may be, and/or may include, an application session ID, a destination PIN ID, and/or a description of the session. In examples, the description of the session may be, and/or may include, (e.g., an IP 4 tuple that describes the session. In examples, the description of the session (e.g., an IP 4 tuple) may be, and/or may include, the IP address of the WTRU, the IP address of the server that provides the service, the WTRU port number that may be associated with the service, and/or one or more port numbers on the server that may be associated with the service.

The PIN server may verify the subscription associated with the WTRU and/or the PIN policy if the WTRU is allowed to request a service switch to the Destination PIN. The PIN server may verify if the PIN may support the requested service switch. If the WTRU is allowed to request the service switch and one or more PINs are available to support the service switch, the PIN server may send a response, such as an OK response, to the WTRU.

The PIN server may start the service switch process by looking into the PIN database for the Destination PIN ID sent by the WTRU. The PIN server may select a PINE, e.g., based on the application session ID and/or the capability of a PINE, where the application session is to be terminated. The PIN server may use the Application session ID to find out one or more details of the application session, such as video quality, audio quality, and/or the like. The PIN server may match with the PINE capability to select the terminating PINE.

Based on an application level communication, the PIN server and/or the application server may determine if the application session may be split and/or if one or more PINEs are available in the PIN. Based on the application level information, the PIN server may split the session if one or more PINEs (e.g., one or more appropriate PINEs) are available. The PIN server may set a flag based on the decision. For example, the flag may be an indication that the session may be split, e.g., from the PEGC among terminating PINEs.

Based on the PIN ID, the PIN server may select the PCM/PEMC. The PCM/PEMC may execute the service switch process as described herein. The PIN server (PCS) may send a request, such as a switch application session request, to the selected PCM/PEMC.

As illustrated in FIG. 7, the PCS may send a request, such as a switch application session request, to a PCM/PEMC. A switch application session request may be, and/or may include, one or more of the following: the application session ID; the destination PINE (e.g., one or more PEIDs (1..N), an IP address, a port number, a uniform resource locator (URL), etc.); an indication indicating whether the application session may be split among two or more PINEs; the description of the session (e.g., IP 4 Tuple); and/or a token that the PEGC may use to prove to the AS that the PEGC may be the end point for the streaming session.

For example, the PCS may send a request, such as a switch application session request, to a PCM/PEMC with an indication. The indication may indicate whether the application session may be split among one or more PINEs. The PCS may set a flag to indicate whether the application session may be split among one or more PINEs. For example, the PCS may set a flag SPLIT to FALSE or TRUE. For example, by setting the flag SPLIT to TRUE, the flag may indicate that the request includes two or more PINEs.

As illustrated in FIG. 7 and/or described herein, the PCM/PEMC may receive a request, such as a service switch request, from a PCS. In examples, the PCM/PEMC described herein may be a WTRU, such as a first WTRU. In examples, the PCS described herein may be a network node. For example, the first WTRU (e.g., PCM/PEMC) may receive a service switch request message from a network node (e.g., the PCS). The service switch request message may request that a session is switched from the first WTRU (e.g., PCM/PEMC) to a PINE. As described herein, the PINE may be associated with the PIN.

As described herein, the service switch request message may be, and/or may include, one or more of the following: an Application Session ID; information associated with a destination PINE; an indication indicating whether an application session may be split among two or more PINEs; a description associated with the session; or a token that indicates that the first WTRU may be an end point for the session.

The information associated with the destination PINE may be, and/or may include, one or more of the following: an IP address associated with the destination PINE, a port number associated with the destination PINE, or an URL associated with the destination PINE.

The description associated with the session may be, and/or may include an IP 4 Tuple.

As illustrated in FIG. 7 and described herein, the PCM/PEMC may go through one or more available PEGCs in the PIN. The PCM/PEMC may select a PEGC that may support the service switch. For example, the PCM/PEMC may select a PEGC that may support the service switch based on its capability to support the application session, reachability towards the selected PINE, and/or the PIN policy of the user.

For example, the first WTRU (e.g., PCM/PEMC) may determine a PEGC in the PIN. The PEGC described herein may be a WTRU, such as a second WTRU. For example, the first WTRU may determine a second WTRU in the PIN. The first WTRU may determine one or more WTRUs (e.g., PEGCs) that are associated with the PIN. The first WTRU may determine a session capability criterion for supporting the session.

For example, the session capability criterion may be, and/or may include, a capability to support the session, reachability information associated with the PINE, or a PIN policy. The capability to support a session may be, and/or may include, a computational capability, a memory capability, a bandwidth capability, a filtering capability, and/or the like. In examples, the session capability criterion may be associated with a threshold level. For example, the session capability criterion may be a threshold level associated with a computational capability of PEGCs that may support a session, a threshold level associated with a memory capability of PEGCs that may support a session, a threshold level associated with a bandwidth capability of PEGCs that may support a session, a threshold level associated with a filtering capability of PEGCs that may support a session, and/or the like.

The first WTRU (e.g., PCM/PEMC) may determine whether a capability of the second WTRU (e.g., PEGC) satisfies the session capability criterion. For example, the first WTRU may determine whether a capability of the second WTRU described herein may be above a threshold level or below a threshold level. If the threshold level associated with one or more capabilities described herein is above a preconfigured threshold level, the first WTRU may determine that the second WTRU satisfies the session capability criterion. If the threshold level associated with one or more capabilities described herein is below a preconfigured threshold level, the first WTRU may determine that the second WTRU does not satisfy the session capability criterion and/or the first WTRU may determine (e.g., evaluate) one or more PEGCs.

Based on a determination that the capability of the second WTRU satisfies the session capability criterion, the first WTRU may determine and/or select the second WTRU from the one or more WTRUs. The first WTRU may determine a PINE identifier associated with the second WTRU. The selected PEGC (e.g., the second WTRU) may be used to set up the switched application session with the AS. For example, the selected PEGC (e.g., the second WTRU) may be used to support the switched application session with the AS, such as receiving the application session from the AS and forwarding to the PINE.

The PCM/PEMC may respond to the PCS (e.g., to the switch application session request) with one or more of the following: the terminating PEGC ID; the terminating PEGC reachability information (e.g., IP address, port number, URL, etc.); and/or the terminating destination PINE reachability information (e.g., IP address, port number, URL, etc.).

As illustrated in FIG. 7 and/or as described herein, the PCM/PEMC (e.g., the first WTRU) may send a message, such as a confirmation message, to the PCS (e.g., the network node). The confirmation message may indicate a session identifier and/or an indication indicating that the PEGC (e.g., the second WTRU) supports the session switching. As described herein, the support for the session switching may be switching the session to the PINE within the PIN, e.g., by accepting the application session and forwarding to a selected PINE. The session identifier may be, and/or may include, one or more of the following: a terminating identifier associated with the second WTRU; reachability information associated with the second WTRU; or reachability information associated with the PINE. The reachability information associated with the PEGC (e.g., the second WTRU) may be, and/or may include, one or more of an IP address associated with the PEGC (e.g., the second WTRU), a port number associated with the PEGC (e.g., the second WTRU), or an URL associated with the PEGC (e.g., the second WTRU). The reachability information associated with the PINE may be, and/or may include, one or more of an IP address associated with the PINE, a port number associated with the PINE, or an URL associated with the PINE.

The PCS may store the information about the terminating PEGC ID, terminating PEGC IP address, and/or terminating PINE reachability information for the service switch context of the user.

The PCS may provide the terminating PEGC information to the AS. The PEGC and/or the AS may set up the switched application session.

As illustrated in FIG. 7, the PCS may inform the AS (e.g., the streaming server) to switch the application session to a destination IP address (e.g., a new destination IP address). The PCS may send one or more of the following: an application session ID (e.g., to identify the application session to be switched to an end point, such as a new end point); and/or a termination IP (TermIP) address (e.g., an IP address of the PEGC where the application session may be terminated).

As illustrated in FIG. 7, the PCM may start configuring the PEGC by sending a message, such as a configure service switch message. The configure service switch message may be, and/or may include, one or more of the following: the session ID; destination PINE information; a value for a flag SPLIT; a packet data unit (PDU) session modification request; and/or a PIN configuration service switch configure request.

The destination PINE information may be, and/or may include, a list of PINE IDs (PEIDs), an IP address, and/or a port number or a URL where one or more sub flows will be terminated. For example, the destination PINE information may be represented as DestinationPineList [ (PEID1, IP address1, Port number1), ... , (PEIDn, IP address N, Port number N)].

The flag SPLIT may be set to TRUE or FALSE based on whether the session may be split (e.g., may need to be split) to two or more PINEs and/or if more than one PINE information is included in the TerminatingPineList.

The PEGC may send a request, such as a PDU session modification request, to the network (e.g., the 5GC). For example, if the PEGC receives the configure service switch message from the PCM, the PEGC may send a PDU session modification request to the network (e.g., the 5GC). The PDU session modification request may be, and/or may include, the IP address, the port number, and/or the PEID received from the PCM. The PDU session modification request may be used to request one or more quality of service (QoS) rules (e.g., one or more new QoS rules) for a flow (e.g., for the new flow). The one or more QoS rules for the flow may be received by the PEGC in a PDU session modification command message. The one or more QoS rules may be used by the PEGC to determine what QoS markings to apply to a traffic if communicating with the PINE that is identified by the PEID.

A PIN configuration service switch configure request may be, and/or may include, one or more of the following: an identifier associated with a requestor; a security credential; an Application Client identifier; an Application Server identifier; a target PIN Client; application session identifier; and/or description of the session, such as an IP 4 Tuple, that describes the traffic of the application session.

As illustrated in FIG. 7 and/or as described herein, the PCM/PEMC (e.g., the first WTRU) may send a message, such as a configuration message, to the PEGC (e.g., the second WTRU). For example, the configuration message may indicate a PINE identifier, the session identifier, and/or a request to support the session switching. For example, the configuration message may indicate the PINE, including one or more of the following a list of PEIDs, an IP address associated with the PINE, a port number associated with the PINE, and/or a URL associated with the PINE. For example, the configuration message may be, and/or may include, an indication indicating whether the session may be split (e.g., may need to be split) to two or more PINEs.

The PEGC may use a token to prove to the AS that the PEGC may be the end point for the streaming session.

Based on the application session ID, the PEGC may configure a port number and/or a URL to receive an application session from the AS. The terminating PINE information may be used to set up the forwarding table. The application session from the AS may be forwarded to the terminating PINE.

If the SPLIT flag is set to TRUE, the PEGC may receive more than one terminating PINE information from the PEMC. The PEGC may configure the forwarding table towards the PINEs, e.g., based on subflows of the application session.

The PEGC may respond with an acknowledgment to indicate whether the PEGC is configured successfully. For example, an indication, such as OK, may indicate a successful configuration.

As illustrated in FIG. 7, the PCM/PEMC may configure the PINE to prepare for terminating the application session, e.g., as indicated by a configure service switch from the PCM to the PINE.

The PINE may set up a connection with the PEGC using the PEGC reachability information. The PINE may configure a port number to receive the application session from the AS through the PEGC.

As illustrated in FIG. 7, the PEGC and/or the PINE may be configured successfully. After successfully configuring the PEGC and/or the PINE, the PCM/PEMC may send an indication, such as a service switch configuration success indication, to the PCS. The PEGC may contact the AS. The PIN GW client may provide a token to prove that the PEGC may be (e.g., may now be) the end point for the session.

As illustrated in FIG. 7 and/or as described herein, the first WTRU (e.g., PCM/PEMC) may receive a message, such as a confirmation message (e.g., a second confirmation message), from the second WTRU (e.g., the PEGC). The second confirmation message may indicate that the second WTRU (e.g., the PEGC) has been configured to support the session switching, e.g., by forwarding data associated with the session to the PINE. The first WTRU (e.g., PCM/PEMC) may send a message, such as a service switch response message, to the network node (e.g., PCS). The service switch response message may indicate that the second WTRU (e.g., the PEGC) has been configured to forward the data associated with the session to the PINE. For example, the configuration may involve setting up an end point identifier of a network node and/or a PINE, e.g., to allow receiving and/or forwarding application data, to set up a forwarding table to forward the application data from the network node to the PINE.

As illustrated in FIG. 7, the PCS, the 5GS, and/or the PEGC may proceed with the session modify and/or the session update to terminate the session in one or more PINEs. The PEGC may split the session (e.g., the main session) into two or more subflows. The two or more split subflows may be terminated into two or more corresponding PINEs. The PEGC may interact with the PCS to maintain synchronization among the subflows.

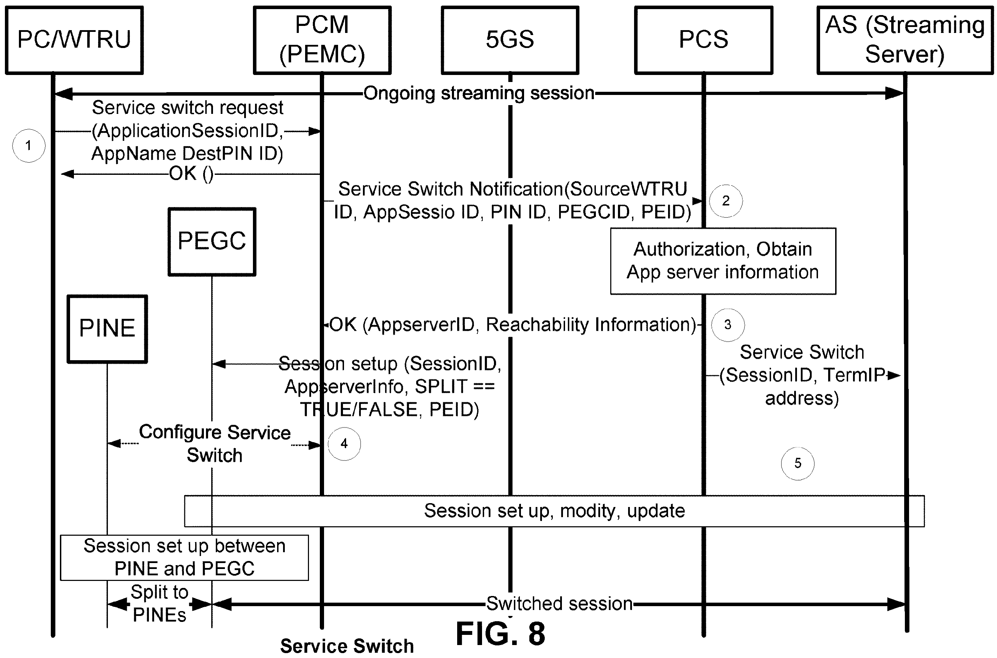

A WTRU may initiate a service switch and a PEMC may execute the service switch. For example, as illustrated in FIG. 8, the PEMC may switch a service from a WTRU to a PIN. FIG. 8 illustrates an example of a service switch executed by a PEMC. One or more processes illustrated in FIG. 8 may or may not be performed (e.g., skipped).

A WTRU may select a PIN. As illustrated in FIG. 8, after a PIN selection, the WTRU may send a request, such as a service switch request, to a PEMC. The service switch request may be, and/or may include, information about an application session ID, an application name, and/or one or more selected PEIDs.

The PEMC may receive (e.g., get) the request from the WTRU. Based on one or more available PIN policies (e.g., obtained from a PIN server), the PEMC may determine whether the WTRU is allowed to request the service switch. The PEMC may determine what kind of quality of service treatment may be provided to the WTRU from the PIN policy (e.g., one or more available PIN policies). Based on the quality of service level and/or the PIN policy, the PEMC may select a PEGC that may support the service switch. The PEMC may send the information to a PIN server. For example, the PEMC may send the information to a PIN server to get authorization and/or update one or more selections for the service switch process described herein.

As illustrated in FIG. 8, the PEMC may send a notification, such as a switch notification, to a PCS and/or a PIN server. The switch notification may be, and/or may include, one or more of the following: a WTRU ID; an application session ID; a PIN ID; a PEGC ID; a PEID; and/or a description of the service.

A WTRU ID may be, and/or may include, a user identity, an application level WTRU ID for the WTRU requesting the service switch. An application session ID may be, and/or may include, a session identifier that the WTRU is requesting to switch. A PIN ID may be, and/or may include, a PIN ID where the service may be switched). A PEGC ID may be, and/or may include, a PEGC in the PIN that may terminate an application session from 5GS and/or a PEGC IP address, available port number, and/or the like. A PEID may be, and/or may include, a PINE and/or a PINAPP where a session may be forwarded and/or be terminated by the PEGC. A description of the service may be, and/or may include, an IP 4 Tuple that may describe the service. For example, a description of the service may be, and/or may include, one or more of the following: one or more WTRU IP Address port numbers that may be associated with the service; and/or a server IP address and port numbers that may be associated with the service.

The PCS may authorize the request. The PCS may identify the AS. For example, the PCS may identify the AS based on the application session ID and/or the IP Address. The AS, such as the PIN AS, may query an application service provider. For example, the PIN AS may query an application service provider to identify an application session and/or to obtain AS information (e.g., an IP address, a port number, a URL, etc.).

The PIN server may check one or more of the following to authorize the request: PIN database; subscription of the WTRU; and/or a PIN policy. The PIN server may query the AS using the Application session ID and/or the service switch request. The PIN server may query AS (e.g., using the Application session ID and/or the service switch request) to determine reachability information associated with the AS. The reachability information associated with the AS may be, and/or may include, an IP address, a port number, a URL, and/or the like.

The PIN server may inform the PEMC that the service switch may be authorized. For example, the PIN server may inform the PEMC that the service switch may be authorized along with one or more AS details, such as the IP address, the port number, the URL, and/or the like.

As illustrated in FIG. 8, the PCS may send a message (e.g., a first message) to the PCM/PEMC. The message (e.g., the first message) may be, and/or may include, an identifier, such as an AS identifier and/or an indication of how to reach the AS, such as an IP address, a port number, a URL, and/or the like. The PCS may inform the AS (e.g., and/or a streaming server). For example, the PCS may inform the AS to switch the application session to a destination IP address, such as a new destination IP address. For example, the destination IP address may be the PINE. The PCS may send a message (e.g., a second message) to the PCM/PEMC. The message (e.g., the second message) may be, and/or may include, an application session ID and/or a termination IP (TermIP) address to the PCM/PEMC. For example, the application session ID may identify the application session to be switched to an end point (e.g., a new end point). For example, a termination IP (TermIP) address may be, and/or may include, an IP address of the PINE where the application session may be terminated.

The PEMC may receive authorization information and/or AS information. The PEMC may obtain information about the session. For example, the information about the session may be whether the session may be (e.g., may need to be) split to more than one PINE by interacting with an AS and/or a PIN server. The PEMC may obtain media related information using an application level interaction.

The PEMC may proceed with executing the service switch process. The PEMC may start configuring the PEGC that was selected as described herein.

As illustrated in FIG. 8, the PCM/PEMC may send the PEGC configuration information for a session set up. The configuration information may be, and/or may include, one or more of the following: a session ID; AS information (e.g., Appserverlnfo); destination PINE information; an indication of whether to split; and/or a PDU session modification request.

A session ID may be, and/or may include, an identifier of the session. AS information (e.g., Appserverlnfo) may be, and/or may include, an IP address and/or a URL. Destination PINE information may be, and/or may include a list of one or more of the following: PEIDs, IP addresses, port numbers and/or URLs where the sub flows may be terminated. For example, destination PINE information may be provided as follows: DestinationPineList [ (PEID1, IP address1, Port number1), ... , (PEIDn, IP address N, Port number N)]. An indication of whether to split may be, and/or may include, a SPLIT flag. For example, the flag SPLIT may be set to TRUE or FALSE if the session is to be split into two or more PINEs and/or if more than one PINE information is included in the TerminatingPineList.

The PEGC may send a request, such as a PDU session modification request, to a network (e.g., a 5GC). For example, if the PEGC receives a configure service switch message from the PCM, the PEGC may send a PDU session modification request to a network (e.g., a 5GC). The PDU session modification request may be, and/or may include, an IP address, a port number, and/or a PEID received from the PCM. The PDU session modification request may be used to request one or more QoS rules for the flow (e.g., one or more new QoS rules for the new flow). The one or more QoS rules for the flow may be received by the PEGC. For example, the one or more QoS rules for the flow may be received by the PEGC in a PDU session modification command message. The one or more QoS rules may be used by the PEGC. For example, the one or more QoS rules may be used by the PEGC to determine what QoS markings to apply to a traffic if communicating with the PINE that is identified by the PEID. The PCM/PEMC may configure the PINE to terminate the session.

Based on the application session ID, the PEGC may configure the port number and/or the URL to receive an application session from an AS. The terminating PINE information may be used to set up the forwarding table. The application session from the AS may be forwarded to the terminating PINE.

If the SPLIT flag is set to TRUE, the PEGC may receive more than one terminating PINE information from the PEMC. The PEGC may configure the forwarding table towards the PINEs based on one or more subflows of the application session.

As illustrated in FIG. 8, the 5GC and PEGC may set up one or more new/modified application session/PDU sessions. The PEGC may split the session (e.g., the main session) into two or more subflows. The subflows may be terminated into two or more PINEs. The PEGC may interact with the PCS to maintain synchronization among the subflows.

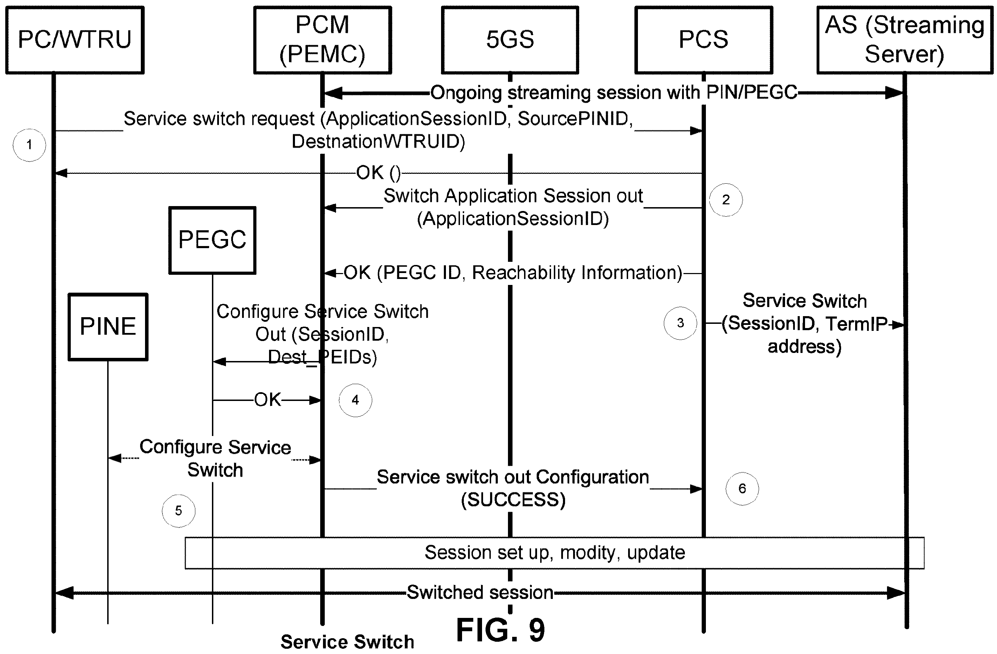

A WTRU may initiate a service switch and a PIN server may execute the service switch. As illustrated in FIG. 9, a PIN server may switch a service from a PIN to a WTRU. A service switch process executed by a PIN server may allow (e.g., enable) a WTRU to trigger a service switch from a PIN to the WTRU (e.g., the triggering WTRU) and/or one or more WTRUs. FIG. 9 illustrates an example of a service switch from a PIN to a WTRU executed by a PIN server. One or more processes illustrated in FIG. 9 may or may not be performed (e.g., skipped).

As illustrated in FIG. 9, a WTRU may send a request, such as a service switch out request, to a PCS/PIN server. The service switch out request may indicate a request for a service switch from a PIN to the WTRU. The request may be, and/or may include, one or more following information: an application session ID; a source PIN ID; and/or a destination WTRU ID.

As illustrated in FIG. 9, the PCS may identify the PCM/PEMC based on the PIN ID. The PCS may send the service switch out request to the PCM/PEMC. The service switch out request may be, and/or may include, an application session ID.

The PCM may respond to the PCS with a PEGC ID and/or PEGC reachability information (e.g., an IP address). A response by the PCM may be, and/or may include, a terminating PEGC ID and/or a description of the session (e.g., an IP 4 Tuple that describes the session). The description of the session (e.g., an IP 4 tuple) may be, and/or may include, the IP address of the PEGC, the IP address of the server that provides the service, port numbers in the PEGC that may be associated with the service, and/or the port numbers on the server that may be associated with the service.

As illustrated in FIG. 9, the PCS may inform the AS (e.g., and/or the streaming server) to switch the application session to a destination IP address (e.g., a new destination IP address). A service switch message from the PCS may be, and/or may include, an application session ID (e.g., to identify the application session to be switched to an end point, such as a new end point) and/or a termination IP (TermIP) address (e.g., an IP address of the WTRU where the application session may be terminated).

As illustrated in FIG. 9, the PCM may start configuring the PEGC. For example, the PCM may start configuring the PEGC by sending a configure service switch out message. The configure service switch out message may be, and/or may include, a session ID and/or Destination PINE information. The Destination PINE information may be, and/or may include, a list of PEIDs, IP addresses, port numbers, and/or URLs indicating where the subflows may be terminated. For example, the destination PINE information may be provided as follows: DestinationPineList [ (PEID1, IP address1, Port number1), ... , (PEIDn, IP address N, Port number N)].

The PEGC may respond with an acknowledgment indicating whether the PEGC was successfully configured. For example, the PEGC may respond with an OK acknowledgment message if the PEGC was configured successfully.

If the PEGC receives the configure service switch message from the PCM, the PEGC may send a request, such as a PDU session modification request, to the network, such as the 5GC. The PDU session modification request may be, and/or may include, the IP address, port number, and/or PEID that were received from the PCM. The PDU session modification request may be used to request one or more QoS rules for the flow (e.g., one or more new QoS rules for the new flow). The one or more QoS rules for the flow may be received by the PEGC. For example, the one or more QoS rules for the flow may be received by the PEGC in a message, such as a PDU session modification command message. The one or more QoS rules may be used by the PEGC. For example, the one or more QoS rules may be used by the PEGC to determine what QoS markings to apply to traffic if communicating with the PINE that is identified by the PEID.

As illustrated in FIG. 9, the PCM may configure the PINE to prepare to stop receiving traffic and/or may configure the PINE to switch the application session over to the WTRU.

As illustrated in FIG. 9, the PCM/PEMC may send an indication that the service switch configuration is successful to the PCS. For example, the PCM/PEMC may send an indication that the service switch configuration is successful to the PCS after the successful configuration of the PEGC and/or the PINE. The PCS, the 5GS, and/or the PEGC may proceed with the session modify and/or session update to complete the service switch out process.

Although features and elements described above are described in particular combinations, each feature or element may be used alone without the other features and elements of the preferred embodiments, or in various combinations with or without other features and elements.

Although the implementations described herein may consider 3GPP specific protocols, it is understood that the implementations described herein are not restricted to this scenario and may be applicable to other wireless systems. For example, although the solutions described herein consider LTE, LTE-A, New Radio (NR) or 5G specific protocols, it is understood that the solutions described herein are not restricted to this scenario and are applicable to other wireless systems as well.

The processes described above may be implemented in a computer program, software, and/or firmware incorporated in a computer-readable medium for execution by a computer and/or processor. Examples of computer-readable media include, but are not limited to, electronic signals (transmitted over wired and/or wireless connections) and/or computer-readable storage media. Examples of computer-readable storage media include, but are not limited to, a read only memory (ROM), a random access memory (RAM), a register, cache memory, semiconductor memory devices, magnetic media such as, but not limited to, internal hard disks and removable disks, magneto-optical media, and/or optical media such as compact disc (CD)-ROM disks, and/or digital versatile disks (DVDs). A processor in association with software may be used to implement a radio frequency transceiver for use in a WTRU, terminal, base station, RNC, and/or any host computer.

### ITEMIZED EMBODIMENTS THAT ARE PART OF THE DESCRIPTION

1. A first wireless transmit/receive unit (WTRU), the first WTRU comprises:
   a processor, the processor configured to:
   receive a service switch request message from a network node, wherein the service switch request message requests that a session is switched from the first WTRU to a personal Internet of Things Network (PIN) element (PINE), wherein the PINE is associated with the PIN;
   determine a second WTRU, wherein the second WTRU supports session switching;
   send a first confirmation message to the network node, wherein the first confirmation message indicates a session identifier and indicates that the second WTRU supports the session switching;
   send a configuration message to the second WTRU, wherein the configuration message indicates a PINE identifier, the session identifier, and a request to support the session switching;
   receive a second confirmation message from the second WTRU, wherein the second confirmation message indicates that the second WTRU has been configured to support the session switching by forwarding data associated with the session to the PINE; and
   send a service switch response message to the network node, wherein the service switch response message indicates that the second WTRU has been configured to forward the data associated with the session to the PINE.
2. The first WTRU of item 1, wherein the first WTRU is a PINE with management capability (PEMC), the network node is a PIN server (PCS), and the second WTRU is a PINE with gateway capability (PEGC).
3. The first WTRU of item 1, wherein the service switch request message comprises one or more of an Application Session identification (ID), information associated with a destination PINE, an indication indicating whether an application session can be split among a plurality of PINEs, a description associated with the session, or a token that indicates that the first WTRU will be an end point for the session.
4. The first WTRU of item 3, wherein the information associated with the destination PINE comprises one or more of an Internet Protocol (IP) address associated with the destination PINE, a port number associated with the destination PINE, or a uniform resource locator (URL) associated with the destination PINE and wherein the description associated with the session comprises an IP 4 Tuple.
5. The first WTRU of item 1, wherein to determine the second WTRU comprises the processor being configured to:
   determine one or more WTRUs that are associated with the PIN;
   determine a session capability criterion for supporting the session;
   determine whether a capability of the second WTRU satisfies the session capability criterion; and
   based on a determination that the capability of the second WTRU satisfies the session capability criterion, determine the second WTRU from the one or more WTRUs and the PINE identifier associated with the second WTRU.
6. The first WTRU of item 5, wherein the session capability criterion for supporting the session comprises one or more of a capability to support the session, reachability information associated with the PINE, or a PIN policy.
7. The first WTRU of item 1, the session identifier comprises one or more of a terminating identifier associated with the second WTRU, reachability information associated with the second WTRU, or reachability information associated with the PINE.
8. The first WTRU of item 7, wherein the reachability information associated with the second WTRU comprises one or more of an IP address associated with the second WTRU, a port number associated with the second WTRU, or an URL associated with the second WTRU, and the reachability information associated with the PINE comprises one or more of an IP address associated with the PINE, a port number associated with the PINE, or an URL associated with the PINE.
9. The first WTRU of item 1, wherein the configuration message indicating the PINE comprises a list of PINE IDs (PEIDs), an IP address associated with the PINE, a port number associated with the PINE, or an URL associated with the PINE and the configuration message further comprises an indication indicating whether the session is to be split to two or more PINEs.
10. A method for a first wireless transmit/receive unit (WTRU), the method comprising:
   receiving a service switch request message from a network node, wherein the service switch request message requests that a session is switched from the first WTRU to a personal Internet of Things Network (PIN) element (PINE), and wherein the PINE is associated with the PIN;
   determining a second WTRU, wherein the second WTRU supports session switching;
   sending a first confirmation message to the network node, wherein the first confirmation message indicates a session identifier and indicates that the second WTRU supports the session switching;
   sending a configuration message to the second WTRU, wherein the configuration message indicates a PINE identifier, the session identifier, and a request to support the session switching;
   receiving a second confirmation message from the second WTRU, wherein the second confirmation message indicates that the second WTRU has been configured to support the session switching by forwarding data associated with the session to the PINE; and
   sending a service switch response message to the network node, wherein the service switch response message indicates that the second WTRU has been configured to forward the data associated with the session to the PINE.
11. The method of item 10, wherein the first WTRU is a PINE with management capability (PEMC), the network node is a PIN server (PCS), and the second WTRU is a PINE with gateway capability (PEGC).
12. The method of item 10, wherein the service switch request message comprises one or more of an Application Session identification (ID), information associated with a destination PINE, an indication indicating whether an application session can be split among a plurality of PINEs, a description associated with the session, or a token that indicates that the first WTRU will be an end point for the session, wherein the information associated with the destination PINE comprises one or more of an Internet Protocol (IP) address associated with the destination PINE, a port number associated with the destination PINE, or an URL associated with the destination PINE and wherein the description associated with the session comprises an IP 4 Tuple, and wherein the configuration message indicating the PINE comprises a list of PINE IDs (PEIDs), an IP address associated with the PINE, a port number associated with the PINE, or an URL associated with the PINE and the configuration message further comprises an indication indicating whether the session is to be split to two or more PINEs.
13. The method of item 10, wherein determining the second WTRU comprises the method comprising:
   determining one or more WTRUs that are associated with the PIN;
   determining a session capability criterion for supporting the session;
   determining whether a capability of the second WTRU satisfies the session capability criterion; and
   based on a determination that the capability of the second WTRU satisfies the session capability criterion, determining the second WTRU from the one or more WTRUs and the PINE identifier associated with the second WTRU.
14. The method of item 13, wherein the session capability criterion for supporting the session comprises one or more of a capability to support the session, reachability information associated with the PINE, or a PIN policy.
15. The method of item 10, the session identifier comprises one or more of a terminating identifier associated with the second WTRU, reachability information associated with the second WTRU, or reachability information associated with the PINE, wherein the reachability information associated with the second WTRU comprises one or more of an IP address associated with the second WTRU, a port number associated with the second WTRU, or an URL associated with the second WTRU, and wherein the reachability information associated with the PINE comprises one or more of an IP address associated with the PINE, a port number associated with the PINE, or an URL associated with the PINE.

## Claims

1. A first wireless transmit/receive unit, WTRU, the first WTRU comprising:
a processor, the processor configured to:
receive a request message from a network node, wherein the request message is associated with an application session to be switched to a destination personal Internet of Things Network element, PINE, wherein the request message comprises a session identifier of the application session, and wherein the destination PINE is associated with a personal Internet of Things Network, PIN;
determine a second WTRU, wherein the second WTRU supports service switching;
send a configure service switch request message to the second WTRU, wherein the configure service switch request message indicates an identifier of the destination PINE and the session identifier of the application session;
receive a confirmation message from the second WTRU; and
send a response message to the network node.

2. The first WTRU of claim 1, wherein the confirmation message indicates that the second WTRU has been configured to support switching the application session.

3. The first WTRU of claim 1, wherein the confirmation message is a first confirmation message, and wherein the processor is further configured to:
on a condition that the confirmation message has been received from the second WTRU, send a second configure service switch request message to the destination PINE; and
receive a second confirmation message from the destination PINE, wherein the second confirmation message indicates that the destination PINE has been configured to support switching the application session.

4. The first WTRU of claim 1, wherein the first WTRU is a PINE with management capability, PEMC, the network node is a PIN server, PCS, and the second WTRU is a PINE with gateway capability, PEGC.

5. The first WTRU of claim 1, wherein the processor being configured to determine the second WTRU comprises the processor being configured to:
determine one or more WTRUs that are associated with the PIN;
determine a session capability condition for supporting the application session;
determine whether a capability of the second WTRU satisfies the session capability condition; and
based on a determination that the capability of the second WTRU satisfies the session capability condition, determine the second WTRU from the one or more WTRUs, and determine a PINE identifier associated with the second WTRU.

6. The first WTRU of claim 5, wherein the session capability condition for supporting the session comprises at least one of a capability to support the session, reachability information associated with a PINE, or a PIN policy.

7. The first WTRU of claim 1, wherein the session identifier of the application session comprises at least one of a terminating identifier associated with the second WTRU, reachability information associated with the second WTRU, or reachability information associated with a PINE.

8. The first WTRU of claim 7, wherein the reachability information associated with the second WTRU comprises at least one of an Internet protocol, IP, address associated with the second WTRU, a port number associated with the second WTRU, or a uniform resource locator, URL, associated with the second WTRU, and the reachability information associated with the PINE comprises at least one of an IP address associated with the PINE, a port number associated with the PINE, or an URL associated with the PINE.

9. A method for a first wireless transmit/receive unit, WTRU, the method comprising:
receiving a request message from a network node, wherein the request message is associated with an application session to be switched to a destination personal Internet of Things Network element, PINE, wherein the request message comprises a session identifier of the application session, and wherein the destination PINE is associated with a personal Internet of Things Network, PIN;
determining a second WTRU, wherein the second WTRU supports service switching;
sending a configure service switch request message to the second WTRU, wherein the configure service switch request message indicates an identifier of the destination PINE and the session identifier of the application session;
receiving a confirmation message from the second WTRU; and
sending a response message to the network node.

10. The method of claim 9, wherein the confirmation message indicates that the second WTRU has been configured to support switching the application session.

11. The method of claim 9, wherein the confirmation message is a first confirmation message, and wherein the method further comprises:
on a condition that the confirmation message has been received from the second WTRU, sending a second configure service switch request message to the destination PINE; and
receiving a second confirmation message from the destination PINE, wherein the second confirmation message indicates that the destination PINE has been configured to support switching the application session.

12. The method of claim 9, wherein the first WTRU is a PINE with management capability, PEMC, the network node is a PIN server, PCS, and the second WTRU is a PINE with gateway capability, PEGC.

13. The method of claim 9, wherein determining the second WTRU comprises:
determining one or more WTRUs that are associated with the PIN;
determining a session capability condition for supporting the application session;
determining whether a capability of the second WTRU satisfies the session capability condition; and
based on a determination that the capability of the second WTRU satisfies the session capability condition, determining the second WTRU from the one or more WTRUs and a PINE identifier associated with the second WTRU.

14. The method of claim 13, wherein the session capability condition for supporting the session comprises at least one of a capability to support the session, reachability information associated with a PINE, or a PIN policy.

15. The method of claim 9, wherein the session identifier of the application session comprises at least one of a terminating identifier associated with the second WTRU, reachability information associated with the second WTRU, or reachability information associated with a PINE.
